# EUROPÄISCHE PATENTSCHRIFT

(11) **EP 1 461 910 B1**
(45) Veröffentlichungstag und Bekanntmachung des Hinweises auf die Patenterteilung: **25.07.2007**
(21) Anmeldenummer: 02795094.8
(22) Anmeldetag: 04.12.2002
(51) Int. Cl.: H04L 12/40, B60R 16/02, H04L 12/417

(54) **ZYKLUSBASIERTES ZEITGESTEUERTES KOMMUNKATIONSSYSTEM, TEILNEHMER EINES SOLCHEN SYSTEMS UND ÜBERTRAGUNGSVERFAHREN**
CYCLICAL TIME-BASED COMMUNICATION SYSTEM, USER IN SUCH A SYSTEM AND TRANSMISSION METHOD
SYSTEME DE COMMUNICATION A BASE CYCLIQUE COMMANDE EN TEMPS, ABONNE D'UN TEL SYSTEME ET PROCEDE DE TRANSMISSION

(30) Priorität: 04.01.2002 DE 10200201
(43) Veröffentlichungstag der Anmeldung: 29.09.2004
(73) Patentinhaber: Robert Bosch GmbH, 70469 Stuttgart (DE); DaimlerChrysler AG, 70327 Stuttgart (DE)
(72) Erfinder: BERWANGER, Josef, 85586 Poing (DE); SCHELD, Anton, 80798 München (DE); BELSCHNER, Ralf, 72124 Pleizhausen (DE); LOHRMANN, Peter, 73054 Eislingen (DE); KÜHLEWEIN, Matthias, 72070 Tübingen (DE); FÜHRER, Thomas, 70839 Gerlingen (DE); MÜLLER, Bernd, 70825 Korntal-Münchingen (DE); HARTWICH, Florian, 72762 Reutlingen (DE); HUGEL, Robert, 76199 Karlsruhe (DE); GEBAUER, Carsten, 74232 Abstatt (DE)
(74) Vertreter: Wörz, Volker Alfred
(86) Internationale Anmeldenummer: PCT/EP2002/013700
(87) Internationale Veröffentlichungsnummer: WO 2003/056764

(56) Entgegenhaltungen:
- R. BELSCHNER, J. BERWANGER, C. BRACKLO, C. EBNER, B. HEDENETZ, W. KUFFNER, P. LOHRMANN, J. MINUTH, M. PELLER, A. SCHEDL, V. SEEFRI: "Anforderungen an ein zukünftiges Bussystem für fehlertolerante Anwendungen aus Sicht Kfz-Hersteller" VDI BERICHTE/VEREIN DEUTSCHER INGENIEURE - GESELLSCHAFT FAHRZEUG- UND VERKEHRSTECHNIK, Bd. 1547, 6. Oktober 2000 (2000-10-06), Seiten 23-41, XP002237734 Baden-Baden
- JOHANSON L ET AL: "QRcontrol, a Bit-Oriented Communication Concept for Control Systems" QRTECH PUBLICATION, 2. Januar 2001 (2001-01-02), XP002201781 Gefunden im Internet: <URL:http://www.qrtech.se/Downloads/qrcont rol_paper_genova010102.PDF> [gefunden am 2002-06-07]
- LÖNN H ET AL: "Synchronisation in safety-critical distributed control systems" ALGORITHMS AND ARCHITECTURES FOR PARALLEL PROCESSING, 1995. ICAPP 95. IEEE FIRST ICAPP., IEEE FIRST INTERNATIONAL CONFERENCE ON BRISBANE, QLD., AUSTRALIA 19-21 APRIL 1995, NEW YORK, NY, USA,IEEE, US, 19. April 1995 (1995-04-19), Seiten 891-899, XP010149230 ISBN: 0-7803-2018-2
- ROSTAMZADEH B ET AL: "DACAPO: a distributed computer architecture for safety-critical control applications" INTELLIGENT VEHICLES '95 SYMPOSIUM., PROCEEDINGS OF THE DETROIT, MI, USA 25-26 SEPT. 1995, NEW YORK, NY, USA,IEEE, US, 25. September 1995 (1995-09-25), Seiten 376-381, XP010194147 ISBN: 0-7803-2983-X
- HANSSON H ET AL: "BASEMENT: AN ARCHITECTURE AND METHODOLOGY FOR DISTRIBUTED AUTOMOTIVE REAL-TIME SYSTEMS" IEEE TRANSACTIONS ON COMPUTERS, IEEE INC. NEW YORK, US, Bd. 46, Nr. 9, 1. September 1997 (1997-09-01), Seiten 1016-1027, XP000701861 ISSN: 0018-9340

## Beschreibung

Die vorliegende Erfindung betrifft ein zyklusbasiertes Kommunikationssystem zur Übertragung von Nutzdaten zwischen Teilnehmern des Systems. Das System umfasst einen Datenbus und daran angeschlossen die Teilnehmer. Die Datenübertragung erfolgt innerhalb sich zyklisch wiederholender Zeitrahmen mit jeweils mindestens zwei zeitschlitzen. Jeder Zeitschlitz ist zur Übertragung einer Nachricht vorgesehen. Eine Nachricht enthält zumindest einen Teil der Nutzdaten und jeder Nachricht ist eine Kennung zugeordnet.

Die Erfindung betrifft außerdem ein Verfahren zum Übertragen von Nutzdaten in einem zyklusbasierten Kommunikationssystem zwischen Teilnehmern des Systems über einen Datenbus, an den die Teilnehmer angeschlossen sind. Die Nutzdaten werden innerhalb sich zyklisch wiederholender Zeitrahmen mit jeweils mindestens zwei Zeitschlitzen übertragen. In jedem zeitschlitz wird eine Nachricht übertragen. Zumindest ein Teil der Nutzdaten wird in einer Nachricht abgelegt. Jeder Nachricht wird eine Kennung zugeordnet.

### Stand der Technik

Aus dem Stand der Technik ist es bekannt, Kommunikationssysteme der eingangs genannten Art in Kraftfahrzeugen oder anderen Verkehrsmitteln (z.B. Flugzeugen, Zügen, Schiffen) zum Datenaustausch zwischen

Steuergeräten einzusetzen. Die Steuergeräte dienen dazu, bestimmte Funktionen des Verkehrsmittels, bspw. Antriebsfunktionen (z.B. Antriebsmotor, Getriebe), Sicherheitsfunktionen (z.B. Antiblockiersystem ABS, Antriebsschlupfregelung ASR, Elektronisches Stabilitätsprogramm ESP) oder Komfortfunktionen (z.B. Klimatisierung des Innenraums) zu steuern oder zu regeln.

Bei den bekannten Kommunikationssystemen erfolgt der Datenaustausch zwischen den Steuergeräten im Wesentlichen über sogenannte Bussysteme in serieller Form. Damit der Datenverkehr sicher und geregelt erfolgt, ist eine Vereinbarung über die Art und Weise der Datenübertragung, ein sogenanntes Protokoll, nötig. FlexRay stellt ein derartiges Protokoll dar, das es erlaubt, serielle Daten zeitgesteuert über ein Bussystem zu übertragen. Dabei werden die Daten in einen Datenrahmen, der zusätzlich Informationen zur Steuerung und Absicherung des Datenverkehrs enthält, zu einer Nachricht verpackt. Diese Nachrichten werden in einer fest vorgegebenen Reihenfolge, sogenannten Zeitschlitzen, zyklisch gesendet.

Bei FlexRay besteht ein Zeitrahmen (Grundzyklus) aus Zeitschlitzen, die in jedem Grundzyklus fest sind (für hochpriore Nachrichten), und aus variablen Zeitschlitzen (für niederpriore Nachrichten oder für Nachrichten mit veränderter oder längerer Zykluszeit). Die Aufteilung eines Grundzyklus in feste und variable Zeitschlitze ist frei wählbar und wird durch die Anforderungen, die an die Datenübertragung gestellt werden, beeinflusst. Die Anforderungen werden bspw. von der Anwendung, innerhalb der die Datenübertragung erfolgen soll, vorgegeben.

Bei FlexRay können nach dem Stand der Technik unterschiedliche Nachrichten innerhalb eines Grundzyklus nur zu unterschiedlichen Zeiten übertragen werden. Entsprechend der Anzahl der zu übertragenden Nachricht wird dadurch auch die Länge eines Grundzyklus bestimmt. Auch wenn mehrere niederpriore Nachrichten nur in jedem n-ten Grundzyklus gesendet werden müssten, so ist zumindest für jede dieser Nachrichten eine Wartezeit vorzuhalten. Somit umfasst der Zeitrahmen so viele Zeitschlitze wie unterschiedliche Nachrichten in irgend einem Grundzyklus übertragen werden müssen. Wenn eine Nachricht in einem bestimmten Zyklus nicht übertragen wird, bleibt der Zeitschlitz für diese Nachricht in dem Zyklus leer.

Die kürzeste Wiederholzeit für "schnelle", d.h. häufig zu übertragende Nachrichten, richtet sich nach dem Grundzyklus. Je länger der Grundzyklus ist, desto seltener können "schnelle" Nachrichten übermittelt werden. Damit trotz eines relativ langen Grundzyklus die "schnellen" Nachrichten öfter wiederholt werden können, ist es bekannt, ihnen mehrere Zeitschlitze innerhalb eines Grundzyklus zuzuweisen. Das hat jedoch den Nachteil, dass eine strenge Periodizität nur schwer bis unmöglich darzustellen ist und dass in der Implementierung eventuell der Speicherbedarf steigt, da mehrere Nachrichtenobjekte für eine Nachricht angelegt werden müssen.

Aus Lönn, H. et al.: Synchronisation in Safety-Critical Distributed Control Systems, Algorithms and Architectures for Parallel Processing, 1995, ICAPP 95, IEEE First ICAPP, IEEE First International Conference on Brisbane, Q1d., Australia, 19-21 April 1995, New York, NY, USA, IEEE, US, 19. April 1995, Seiten 891-899, ISBN 0-7803-2018-2, ist ein zyklusbasiertes Kommunikationssystem der eingangs genannten Art zur Übertragung von Nutzdaten zwischen Teilnehmern des Systems bekannt. Dieser Veröffentlichung kann jedoch kein Hinweis darauf entnommen werden, dass in einem Zeitschlitz der Zeitrahmen, in denen Nachrichten mit den Nutzdaten übertragen werden, nach der Art eines Multiplexing in unterschiedlichen Übertragungszyklen Nachrichten von verschiedenen Teilnehmern des Systems übertragen werden können.

Belschner, R. et al.: Anforderungen an ein zukünftiges Bussystem für fehlertolerante Anwendungen aus Sicht Kfz-Hersteller, VDI-Berichte/ Verein Deutscher Ingenieure - Gesellschaft Fahrzeug- und Verkehrstechnik, Bd. 1547, 6. Oktober 2000, Seiten 23-41, beschreibt allgemein die Anforderungen der Kraftfahrzeughersteller an ein zukünftiges Kommunikationssystem. Dieser Veröffentlichung kann jedoch kein Hinweis auf ein Multiplexen der Nachrichten in den Zeitschlitzen der Zeitrahmen entnommen werden.

Johansson, L. et al.: QRcontrol, a Bit-Oriented Communication Concept for Control Systems, QRtech Publication, 2. Januar 2001, beschreibt ein zyklusbasiertes Kommunikationssystem zur Übertragung von Nutzdaten zwischen Teilnehmern des Systems. Das beschriebene Kommunikationssystem unterscheidet sich von dem der eingangs genannten Art insbesondere dadurch, dass das bekannte System Zeitschlitze in der Größe einer Bit-Dauer verwendet. Falls ein Teilnehmer mehrere Bits senden möchte, benötigt er dafür mehrere Zeitschlitze. Darüber hinaus ermöglicht das bekannte Kommunikationssystem komplett unterschiedliche Zeitschlitz-Folgen pro Übertragungszyklus. Es ändert sich also die Anzahl von gebuchten Zeitschlitzen in Folge pro Teilnehmer abhängig von dem aktuellen Zyklus. Bei der Entgegenhaltung gibt es also keine feste zeitliche Zuordnung eines Zeitschlitzes zu einem Teilnehmer. Diese fehlende feste zeitliche Zuordnung der Zeitschlitze zu bestimmten Teilnehmern des Systems stellt einen wichtigen Unterschied zu dem Kommunikationssystem der eingangs genannten Art dar.

Aus Rostamzadeh, B. et al.: DACAPO: a Distributed Computer Architecture for Safety-Critical Control Applications, Intelligent Vehicles '95 Symposium, Proceedings of the Detroit, MI, USA, 25-26 Sept. 1995, New York, NY, USA, IEEE, US, Seiten 376-381, ISBN 0-7803-2983-X ist ein Verfahren zur Übertragung von Nachrichten in Zeitschlitzen innerhalb aufeinander folgender Zyklen bekannt. Dabei können ungenutzte Zeitschlitze anderen Teilnehmern zur Verfügung gestellt werden.

Aufgabe der vorliegenden Erfindung ist es, bei einer Datenübertragung über ein zyklusbasiertes, zeitgesteuertes Kommunikationssystem, bei dem Nachrichten in Zeitschlitzen einer festen Länge von sich zyklisch wiederholenden Zeitrahmen übertragen werden, eine besonders effiziente Übertragung, insbesondere für den Fall, dass Nachrichten nicht in jedem Zyklus übertragen werden müssen, zu ermöglichen. Die Aufgabe wird durch ein System und Verfahren gemäß den Ansprüchen 1 und 6 gelöst.

Zur Lösung dieser Aufgabe schlägt die vorliegende Erfindung ausgehend von dem Kommunikationssystem der Eingangs genannten Art vor, dass die Kennung als Teil der Nachricht in jeder Nachricht abgelegt ist, dass die oder jede Nachricht Informationen über den Zyklus enthält, dass die Zeitschlitze eine feste Länge aufweisen und dass Mittel vorgesehen sind, um mindestens einen der Zeitschlitze eines Zeitrahmens in verschiedenen Zyklen zur versetzten Übertragung unterschiedlicher Nachrichten zu nutzen, die nicht zur Übertragung in jedem Zyklus vorgesehen sind.

### Vorteile der Erfindung

In dem oder jedem Zeitschlitz, der in verschiedenen Zyklen zur Übertragung unterschiedlicher Nachrichten nutzbar ist, können erfindungsgemäß solche Nachrichten versetzt zueinander in verschiedenen Zyklen übertragen werden, die lediglich in jedem n-ten Grundzyklus übertragen werden müssen. Wenn also eine bestimmte Nachricht in einem Zyklus außerhalb des n-ten Zyklus nicht übertragen werden muss, kann in diesem Zyklus eine andere Nachricht in dem entsprechenden Zeitschlitz übertragen werden; eine Wartezeit muss für die Nachricht, die während dieses Zyklus nicht übertragen wird, nicht vorgehalten werden.

Mit der vorliegenden Erfindung kann also einerseits die Anzahl der Zeitschlitze eines Zeitrahmens reduziert werden, wodurch sich eine kürzere Wiederholzeit für "schnelle" Nachrichten realisieren lässt. Außerdem werden die einzelnen Zeitschlitze des Zeitrahmens effektiver ausgenutzt, wodurch eine höhere effektive Bandbreite erzielt werden kann. Insbesondere können Nachrichten mit kurzer und langer Wiederholzeit in dem Kommunikationssystem ohne Bandbreitenverlust besser untergebracht werden. Außerdem wird die Systemauslegung flexibler und von einem Kommunikationscontroller müssen weniger Zeitschlitze überwacht werden.

Um die verschiedenen Nachrichten, die innerhalb des gleichen Zeitschlitzes in verschiedenen Zyklen versetzt zueinander übertragenen werden, voneinander unterscheiden zu können, und um festlegen zu können, welche Nachrichten in welchem Zyklus innerhalb des Zeitschlitzes übertragen werden, werden zusätzliche, die Zyklen betreffende Informationen eingeführt. Anhand der Kennung und der zusätzlich eingeführten Zyklusinformationen kann eine Nachricht eindeutig definiert werden. Durch die Kennung ist der Zeitschlitz definiert, in dem die Nachricht übertragen wird. Durch die Zyklusinformation ist der Zyklus definiert, in dem die Nachricht übertragen wird.

Zum Senden von Nachrichten beobachten die Teilnehmer des Kommunikationssystems den Datenverkehr auf dem Datenbus und überprüfen in regelmäßigen zeitlichen Abständen die Zyklusinformationen. Die Teilnehmer senden in einem vorgebbaren Zeitschlitz eine Nachricht, falls die aktuellen Zyklusinformationen mit einem in einem Speicher des Teilnehmers abgelegten, vorgebbaren Wert für die Zyklusinformationen übereinstimmen.

Zum Empfangen von Nachrichten über den Datenbus beobachten die Teilnehmer ebenfalls den Datenverkehr auf dem Datenbus. Die Teilnehmer überprüfen die Kennung der über den Datenbus übertragenen Nachrichten. Falls eine Nachricht eine Kennung aufweist, die einer vorgebbaren Kennung entspricht, werden zumindest die Nutzdaten der übertragenen Nachricht in den Teilnehmer geladen und dort bspw. in einem Speicher abgelegt oder weitergeleitet. Vor der Weiterverarbeitung der Nutzdaten werden die Zyklus informationen überprüft. Nur in dem Fall, dass sie einem in dem Teilnehmer abgespeicherten Wert für die Zyklusinformationen entsprechen, werden die Nutzdaten weiterverarbeitet.

Die Zyklusinformationen sind bspw. als ein gesonderter Zykluszähler (sogenannter Cycle-Count) ausgebildet. Vorzugsweise sind die Zyklusinformationen jedoch Teil der Nachrichtenkennung. Deshalb wird vorgeschlagen, dass die Nachrichten zusätzlich zu der Kennung den aktuellen Zyklus betreffende Informationen enthalten. Vorzugsweise sind die Zyklusinformationen Teil der Kennung und werden in den Teilnehmern zusammen mit der Verarbeitung der Kennung verarbeitet. Der zusätzliche Aufwand in den Teilnehmern zur Realisierung der Verarbeitung der Zyklusinformationen kann dadurch minimiert werden.

Dadurch dass jede Nachricht Zyklusinformationen enthält und die Zyklusinformationen zusammen mit der Nachricht übertragen werden, können die Zyklusinformationen in den Teilnehmern einfacher verarbeitet werden. Insbesondere wird verhindert, dass Nachrichten, deren Kennung zwar mit einer vorgegebenen Kennung übereinstimmt, die aber insofern für den Teilnehmer uninteressant sind als sie in dem falschen Zyklus übertragen wurden, gar nicht erst in den Teilnehmer geladen werden. Insgesamt werden also deutlich weniger Nachrichten in einem Speicher des Teilnehmers abgelegt. Der für die Nutzdaten bzw. für die Nachricht vorgesehene Speicher der Teilnehmer beim Ablegen neuer in den Teilnehmer geladener Nachrichten bzw. Nutzdaten mit der neuen Nachricht bzw. mit den neuen Nutzdaten überschrieben. Die in dem Speicher abgelegten Nutzdaten müssen also bis zum Eintreffen neuer Nutzdaten bzw. einer neuen Nachricht verarbeitet sein; sonst sind sie verloren. Unter Ausnutzung der Zyklusinformationen kann die für die einzelnen empfangen Nachrichten zur Verfügung stehende Verarbeitungszeit deutlich erhöht werden, da bei Berücksichtigung der Zyklusinformationen deutlich seltener Nachrichten in den Teilnehmer geladen werden als ohne.

Den Teilnehmern des Kommunikationssystems ist jeweils mindestens ein vorgebbarer Zeitschlitz der Zeitrahmen zur Datenübertragung zugewiesen. Das bedeutet also, dass innerhalb eines Zeitschlitzes in verschiedenen Zyklen zwar unterschiedliche Nachrichten übertragen werden können, diese Nachrichten aber von dem gleichen Teilnehmer ausgesandt werden. Dadurch ergeben sich entscheidende Vereinfachungen in der Steuerung des Ablaufs der Datenübertragung in dem erfindungsgemäßen Kommunikationssystem.

Gemäß einer bevorzugten Ausführungsform der vorliegenden Erfindung wird vorgeschlagen, dass die Information über den Zyklus den aktuellen Zyklus betreffen. Vorzugsweise umfassen die den aktuellen Zyklus betreffenden Informationen eine Ordnungszahl des Zyklus. Im einfachsten Fall umfasst die Ordnungszahl zwei Werte: 0 und 1. Dadurch können ungerade von geraden Zyklen unterschieden werden. Die Ordnungszahl kann beliebig erweitert werden, um mehr Zyklen voneinander zu unterscheiden.

Die Nachrichten, die über das erfindungsgemäße Kommunikationssystem übertragen werden, haben bspw. den folgenden Aufbau: Die Nachrichten sind unterteilt in Steuerdaten und Nutzdaten, die jeweils mehrere Bits umfassen. Die Steuerdaten umfassen bspw. 10 Identifier-Bits, gefolgt von einem Multiplex-Bit (MUX-Bit) einem Sync-Bit und 4 Bit Längeninformationen. Die Identifier-Bits bilden zusammen mit dem MUX-Bit die Nachrichtenkennung. Die Identifier-Bits geben die Ordnungszahl des Zeitschlitzes, in dem eine Nachricht übertragen wird, innerhalb des Zeitrahmens wieder. Das MUX-Bit wird als Zyklusinformation genutzt. Anhand des MUX-Bits mit 1 Bit Länge können gerade und ungerade Zyklen voneinander unterschieden werden. Dadurch können zwei unterschiedliche Nachrichten voneinander unterschieden werden, obwohl sie die gleichen Identifier haben. Selbstverständlich ist es auch möglich, für die zusätzlichen Zyklusinformationen mehr als 1 Bit vorzusehen, so dass 4, 16, 32 oder mehr verschiedene Zyklen voneinander unterschieden werden können.

Vorteilhafterweise sind jeder Nachricht zusätzlich den Zeitschlitz betreffende und der Kennung entnehmbare Zeitinformationen zugeordnet. Vorzugsweise umfassen die Zeitinformationen Informationen über die zeitliche Position eines Zeitschlitzes innerhalb eines Zeitrahmens. In den Teilnehmern ist die Übertragungsdauer der einzelnen Zeitschlitze bekannt. Anhand der Kennung einer aktuellen Nachricht kann bestimmt werden, in welchem Zeitschlitz sie übertragen wird. Anhand der Information über die zeitliche Position des Zeitschlitzes und die Übertragungsdauer des Zeitschlitzes kann das zeitliche Ende der Übertragung der aktuellen Nachricht und der Beginn der Übertragung der nachfolgenden Nachricht genau bestimmt werden.

Die Teilnehmer des Kommunikationssystems können Mittel zum Vergleichen von jeder Nachricht zugeordneten, den Zeitschlitz der Nachricht betreffenden Zeitinformationen mit einem in einem Speicher des Teilnehmers abgelegten vorgebbaren Wert für die Zeitinformationen und Mittel zum Senden einer Nachricht, falls die Zeitinformationen mit dem im Speicher abgelegten Wert für die Zeitinformationen übereinstimmt, umfassen.

Die Teilnehmer können Mittel zum Vergleichen der Kennungen der Nachrichten mit einem in einem Speicher des jeweiligen Teilnehmers abgelegten vorgebbaren Wert für die Kennung und Mittel zum Empfangen zumindest der Nutzdaten einer übertragenen Nachricht umfassen, falls die Kennung der Nachricht mit dem in dem Speicher abgelegten vorgebbaren Wert für die Kennung übereinstimmt. Die Mittel zum Vergleichen der Kennungen der Nachrichten vergleichen auch den Nachrichten zugeordnete Zyklusinformationen mit in dem Speicher des Teilnehmers abgelegten vorgebbaren Werten für die Zyklusinformationen. Die Mittel zum Empfangen zumindest der Nutzdaten einer Nachricht empfangen die Nutzdaten nur, falls die Kennung und die zyklusinformationen der Nachricht mit den in dem Speicher des Teilnehmers abgelegten vorgebbaren Werten übereinstimmen.

Die Teilnehmer des Kommunikationssystems überprüfen also nicht nur - wie bisher üblich - die Kennung einer Nachricht, die Aufschluss über eine zeitliche Position des Zeitschlitzes, in dem die Nachricht übertragen wird, innerhalb eines Zeitrahmens gibt. Vielmehr überprüfen die Teilnehmer auch den Nachrichten zugeordnete Zyklusinformationen, aus denen sich ergibt, in welchem Zyklus die aktuelle Nachricht übertragen wurde.

Als eine weitere Lösung der Aufgabe der vorliegenden Erfindung wird ausgehend von dem Verfahren zur Datenübertragung der Eingangs genannten Art vorgeschlagen, dass die Nachrichten in Zeitschlitzen einer festen Länge übertragen werden, dass die Kennung als Teil der Nachricht in jeder Nachricht abgelegt wird, dass in der oder jeder Nachricht Informationen über den Zyklus abgelegt werden, dass in mindestens einem der Zeitschlitze eines Zeitrahmens unterschiedliche Nachrichten versetzt zueinander in verschiedenen Zyklen übertragen werden, wobei in dem mindestens einen Zeitschlitz solche Nachrichten versetzt zueinander übertragen werden, die nicht zur Übertragung in jedem Zyklus vorgesehen sind. Die Kennung ist bspw. in den ID-Bits und die Zyklusinformationen sind in dem oder den MUX-Bits einer Nachricht realisiert.

Gemäß einer vorteilhaften Weiterbildung der Erfindung wird vorgeschlagen, dass den Teilnehmern des Kommunikationssystems jeweils mindestens ein vorgebbarer Zeitschlitz der Zeitrahmen zur Datenübertragung zugewiesen wird.

Gemäß einer bevorzugten Ausführungsform der vorliegenden Erfindung wird vorgeschlagen, dass in der oder jeder Nachricht Informationen über den aktuellen Zyklus abgelegt werden. Vorzugsweise werden die Zyklusinformationen als Teil der Kennung einer Nachricht in dieser abgelegt.

Vorteilhafterweise werden die in den Zeitschlitzen der Zeitrahmen über den Datenbus übertragenen Nachrichten von den Teilnehmern des Kommunikationssystems beobachtet. Die Kennungen und die Zyklusinformationen der Nachrichten werden mit in Speichern der beobachtenden Teilnehmer abgelegten vorgebbaren Werten für die Kennung und die Zyklusinformationen verglichen. Es werden zumindest die Nutzdaten einer übertragenen Nachricht nur dann von einem Teilnehmer empfangen, falls die Kennung und die Zyklusinformationen der Nachricht mit den in dem Speicher des Teilnehmers abgelegten vorgebbaren Werten für die Kennung und die Zyklusinformationen übereinstimmen.

Vorzugsweise wird der Datenverkehr auf dem Datenbus des Kommunikationssystems beobachtet und werden von den Teilnehmern die aktuellen Zyklusinformationen überprüft. Von einem Teilnehmer wird nur dann in einem vorgebbaren Zeitschlitz eine Nachricht gesendet, falls die aktuellen Zyklusinformationen mit einem in einem Speicher des Teilnehmers abgelegten, vorgebbaren Wert für die Zyklusinformationen übereinstimmen.

### Zeichnungen

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von Ihrer Zusammenfassung in den Patentansprüchen oder deren Rückbeziehung sowie unabhängig von ihrer Formulierung bzw. Darstellung in der Beschreibung bzw. in der Zeichnung. Es zeigen:
- Figur 1: ein zyklusbasiertes zeitgesteuertes Kommunikationssystem gemäß einer bevorzugten Ausführungsform der vorliegenden Erfindung;
- Figur 2: einen Zeitrahmen mit mehreren Zeitschlitzen zur Übertragung von Nachrichten in dem Kommunikationssystem aus Figur 1;
- Figur 3a: den Aufbau einer in einem Zeitschlitz der Zeitrahmen aus Figur 2 übertragenen Nachricht gemäß
- Figur 3b: den Aufbau einer in einem Zeitschlitz der Zeitrahmen aus Figur 2 übertragenen Nachricht gemäß einer zweiten Ausführungsform;
- Figur 4a: ein Ablaufdiagramm eines erfindungsgemäßen Verfahrens zum Senden von Nutzdaten über das Kommunikationssystem aus Figur 1; und
- Figur 4b: ein Ablaufdiagramm eines erfindungsgemäßen Verfahrens zum Empfangen von Nutzdaten über das Kommunikationssystem aus Figur 1.

### Beschreibung der Ausführungsbeispiele

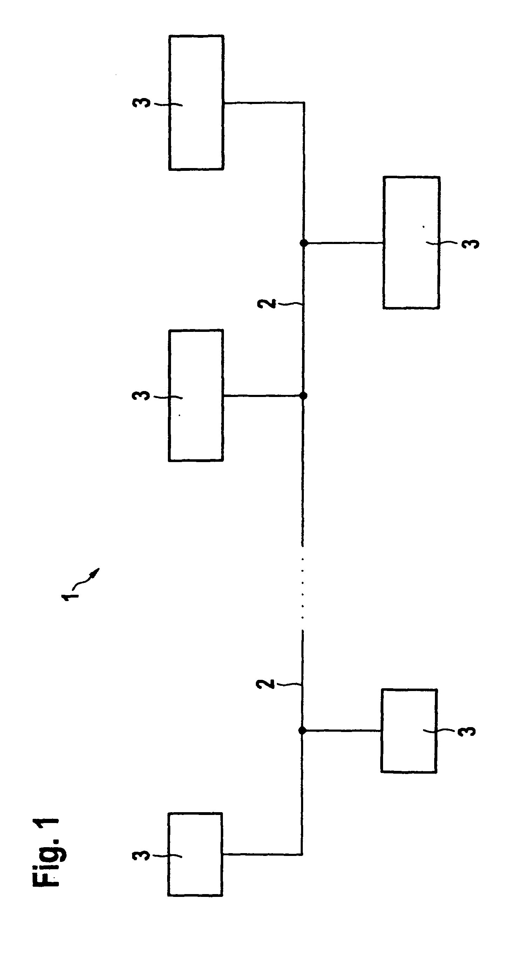

In Figur 1 ist ein zyklusbasiertes, zeitgesteuertes Kommunikationssystem zur Übertragung von Nutzdaten in der Gesamtheit mit dem Bezugszeichen 1 bezeichnet. Das Kommunikationssystem 1 umfasst einen Datenbus 2 und mehrere daran angeschlossene Teilnehmer 3. Das Kommunikationssystem 1 kann in beliebigen Bereichen eingesetzt werden; ein bevorzugter Einsatzbereich ist die Verkehrstechnik, wo das Kommunikationssystem 1 bspw. in Kraftfahrzeugen, Zügen, Flugzeugen oder Schiffen zur Datenübertragung zwischen Teilnehmern 3 in Form von Steuergeräten oder einfachen Kommunikationscontrollern eingesetzt werden kann.

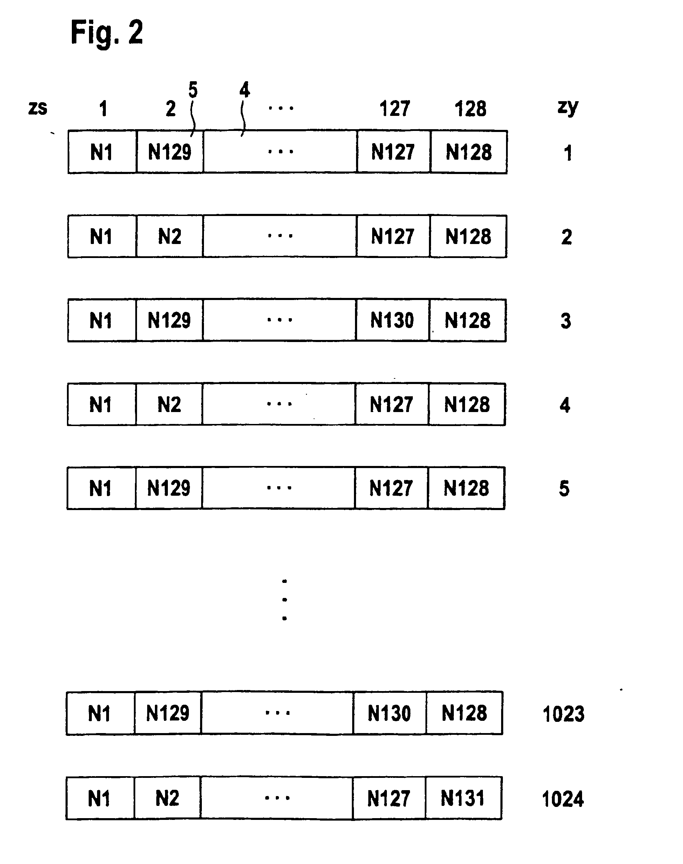

Die Datenübertragung in dem Kommunikationssystem 1 erfolgt innerhalb sich zyklisch wiederholender Zeitrahmen 4 mit jeweils mindestens zwei Zeitschlitzen 5. Die Zeitschlitze 5 werden auch als Slots bezeichnet. In Figur 2 sind Zeitrahmen 4 mehrerer Zyklen dargestellt, wobei bei dem dargestellten Ausführungsbeispiel 1024 Zyklen (zy = 1 ... 1024) vorgesehen sind und jeder Zeitrahmen 4 128 Zeitschlitze 5 (zs = 1... 128) umfasst. Ein Zeitschlitz 5 ist mehrere Bytes gross, insbesondere bewegt sich die Größe der Zeitschlitze 5 im Bereich von 12 Bytes bis 240 Bytes.

Damit der Datenverkehr über das Kommunikationssystem 1 sicher und geregelt erfolgt, ist eine Vereinbarung über die Art und Weise der Datenübertragung, ein sogenanntes Protokoll nötig. Ein solches an sich aus dem Stand der Technik bekanntes Protokoll ist bspw FlexRay, das es erlaubt, serielle Daten zeitgesteuert über den Datenbus 2 zu übertragen. Dabei werden die zu übertragenden Nutzdaten zu einer Nachricht verpackt, die außer den Nutzdaten zusätzlich Informationen zur Steuerung und Absicherung des Datenverkehrs (Steuerdaten) enthält. Die Nachrichten werden in einer fest vorgegebenen Reihenfolge in den Zeitschlitzen 5 zyklisch übertragen. Die Position der Zeitschlitze 5 in den Zeitrahmen 4 ist durch eine Kennung (sog. Identifier, .ID) in der Nachricht bestimmt.

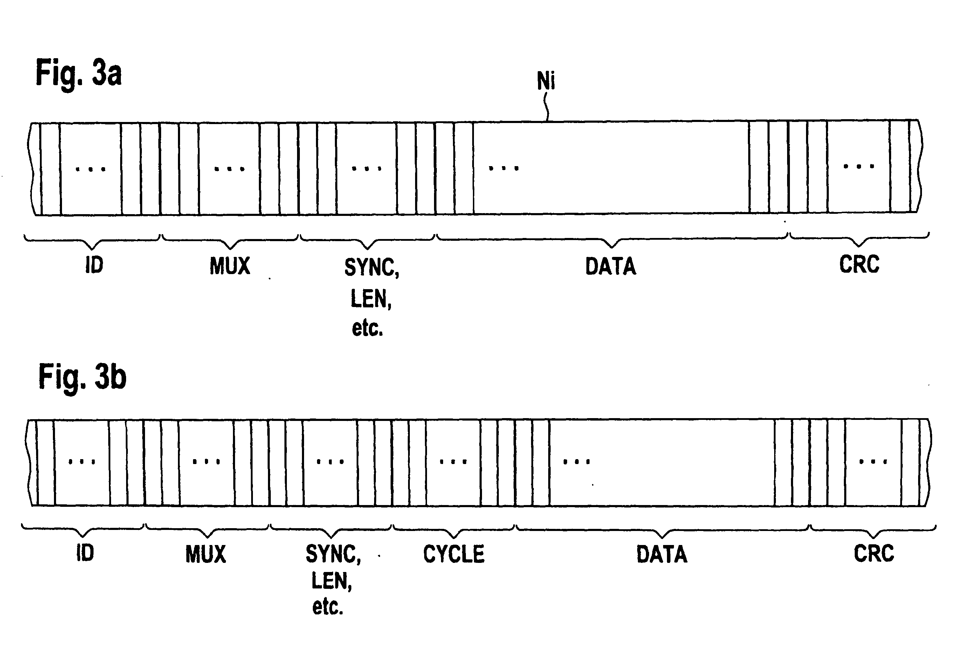

In Figur 2 sind die einzelnen Nachrichten mit Ni (i - 1 ... 131) bezeichnet. Der Aufbau einer solchen Nachricht ist beispielhaft in Figur 3a und Figur 3b dargestellt. Bei FlexRay besteht ein Zeitrahmen 4 (Grundzyklus) aus Zeitschlitzen 5, die in jedem Grundzyklus fest sind (für hochpriore Nachrichten), und aus variablen Zeitschlitzen 5 (für niederpriore Nachrichten oder für Nachrichten mit veränderter oder längerer Zykluszeit). Die Aufteilung eines Grundzyklus in feste und variable Zeitschlitze:5 ist frei wählbar und wird durch die Anwendung beeinflusst, im Rahmen derer die Datenübertragung erfolgt.

Beim Stand der Technik verfügen die Nachrichten Ni über ein sogenanntes Multiplex-Bit (MUX-Bit), durch das die Möglichkeit besteht, Nachrichten auf zwei Zyklen aufzuteilen. Dabei wird das MUX-Bit von der Anwendung geschaltet, im Rahmen derer eine Nachricht über zwei Zyklen übertragen wird. Wenn bspw. der erste Teil einer größeren Nachricht übertragen wird, wird das MUX-Bit von der Anwendung auf 0, und wenn der zweite Teil der Nachricht übertragen wird, auf 1 gesetzt. Eine Verbindung zwischen dem aktuellen Zyklus zy und dem MUX-Bit ist beim Stand der Technik nicht gegeben.

Das MUX-Bit schließt sich direkt an die Kennung (ID) der Nachrichten Ni an (vgl. Figur 3a). Bei der vorliegenden Erfindung wird das MUX-Bit deshalb dazu genutzt, Informationen den aktuellen Zyklus betreffend in der Nachricht abzulegen. Mit Hilfe eines MUX-Bits können zwei verschiedene Zyklen, insbesondere gerade und ungerade Zyklen, voneinander unterschieden werden. Wenn mehr als ein MUX-Bit vorgesehen ist, können auch mehr als zwei Zyklen voneinander unterschieden werden. Falls die in der Nachrichtenstruktur vorgesehenen MUX-Bits nicht ausreichen, um die gewünschte Anzahl von Zyklen voneinander zu unterscheiden, wird gemäß der vorliegenden Erfindung die Aufteilung der ID- und der MUX-Bits so geändert, dass die gewünschte Anzahl an Zyklen voneinander unterschieden werden kann. Bei dem Ausführungsbeispiel aus Figur 2 müssen bspw. zur Kennzeichnung der 128 Zeitschlitze 4 mindestens sieben ID-Bits und zur Unterscheidung der 1024 Zyklen voneinander mindestens 10 MUX-Bits in der Nachrichtenstruktur vorgesehen sein.

Innerhalb einer Nachricht Ni (vgl. Figur 3a) ist die Kennung ID mit bspw. 10 Bit-Länge vorgesehen. Ober die Kennung einer aktuellen Nachricht wird die Ordnungszahl des Zeitschlitzes 5, über den die Nachricht übertragen wird, und - da die Länge (d.h. die Übertragungsdauer) der einzelnen Zeitschlitze 5 festgelegt und bekannt ist - dadurch auch der Zeitpunkt für das zeitliche Ende der Übertragung der aktuellen Nachricht und der Zeitpunkt für den zeitlichen Beginn der Übertragung der nachfolgenden Nachricht festgelegt. An die Kennung ID schließen sich die MUX-Bits an. Die nachfolgenden SYNC- bzw. LEN-Bits umfassen Informationen zur Steuerung und Absicherung des Datenverkehrs über das Kommunikationssystem 1. Insbesondere ist dies ein Synchronisations-Feld (SYNC-Bit) mit bspw. ein Bit Länge und ein Längen-Feld (LEN-Bits) mit bspw. vier Bit Länge. Das SYNC-Bit dient zur Synchronisation der Teilnehmer 3 des Kommunikationssystems 1 auf eine gemeinsame Zeitbasis. Anhand der LEN-Bits wird die Anzahl der Bytes mit Nutzdaten (DATA-Bytes) angegeben. Das LEN-Feld muss bspw. 8 Bit umfassen, wenn bis zu 256 Bytes für die Nutzdaten vorgesehen sind. Am Ende des Nutzdaten (DATA-Bytes) ist ein Sicherheitsfeld vorgesehen, das bspw, als ein Cyclic Redundancy Check (CRC)-Feld mit einer Länge von 16 Bit ausgebildet ist, vorgesehen.

Durch die zusätzlichen Zyklusinformationen ist es möglich, unterschiedliche Nachrichten in dem gleichen Zeitschlitz 5 eines Zeitrahmens 4, aber in verschiedenen Zyklen zu übertragen. Dies ist bspw. in Figur 2 verdeutlicht. Dort ist zu erkennen, dass in dem Zeitschlitz zs2 in dem Zyklus zy1 die Nachricht N129 und in dem Zyklus zy2 die Nachricht N2 übertragen wird. Ebenso wird in dem Zeitschlitz zs127 in den Zyklen zy1 und zy2 die Nachricht N127 und in dem Zyklus zy3 die Nachricht N130 übertragen. Schließlich wird in dem Zeitschlitz zs128 in den Zyklen zy1 ... zy1023 die Nachricht N128 und in dem Zyklus zy1024 die Nachricht N131 übertragen.

Die Zeitschlitze zs2, zs127 und zs128 werden also jeweils zur Übertragung von zwei unterschiedlichen Nachrichten N2 und N129, N127 und N130 bzw. N128 und N131 genutzt. Die Nachrichten N2 und N129 werden bei jedem zweiten Zyklus zy übertragen. Zur Identifikation der Nachrichten N2 und N129 würde eine Unterscheidung der Zyklen zy in gerade Zyklen (für N2) und ungerade Zyklen (für N129) mit Hilfe eines MUX-Bits genügen (2^1 = 2). Die Nachrichten N127 werden bei zwei von drei Zyklen zy und die Nachricht N130 wird bei jedem dritten Zyklus zy übertragen. Zur Identifikation der Nachrichten N127 und N130 ist eine Unterscheidung von drei verschiedenen Zyklen zy mit Hilfe mindestens zweier MUX-Bits erforderlich ( 2^2= 4). Die Nachrichten N128 werden bei 1023 von 1024 Zyklen zy und die Nachricht N131 wird bei jedem 1024-ten Zyklus zy übertragen. Zur Identifikation der Nachrichten N128 und N131 ist eine Unterscheidung von 1024 verschiedenen Zyklen zy mit Hilfe mindestens zehn MUX-Bits erforderlich (2^10 = 1024) .

Mit der vorliegenden Erfindung kann auf zusätzliche Zeitfenster 4 für die Nachrichten N129, N130 und N131 verzichtet werden. Zur Übertragung dieser Nachrichten werden vielmehr für die Nachrichten N2, N127 und N128. bereits vorhandene Zeitfenster 4 in denjenigen Zyklen genutzt, in den die Nachrichten N2, N127 und N128 nicht übertragen werden. Auf diese Weise kann die Gesamtlänge der Zeitrahmen 4 und damit auch die Zykluszeit verringert werden. Damit wird die Bandbreite der Datenübertragung erhöht. Insgesamt wird die Auslegung des Kommunikationssystems 1 wesentlich flexibler. Die Anzahl der zu überwachenden Zeitschlitze 5 in einem Busguardian werden weniger.

Zur Realisierung der vorliegenden Erfindung müssen - wie oben bereits beschrieben - die verschiedenen Zyklen voneinander unterschieden werden können. Dazu kann entweder eine in die Kennung ID der Nachrichten Ni (vgl. Figur 3a) integrierte zusätzliche Zyklusinformation MUX oder ein gesonderter Zykluszähler (sog. CYCLE-Count) (vgl. Figur 3b) herangezogen werden. Zur Übertragung eines CYCLE-Count in einer Nachricht Ni kann bspw. mindestens eines der DATA-Bytes (= 8 Bit) herangezogen werden. Der CYCLE-Count ist ein eigenständiger Zähler der nach jedem Zyklus erhöht (oder erniedrigt) wird und der von Zeit zu Zeit gesondert abgefragt werden muss.

Durch den CYCLE-Counter kann die Anzahl der zu multiplexenden Zyklen weiter erhöht werden, falls es eine Anwendung erforderlich macht. Dadurch lassen sich auch sehr lange Wiederholzeiten (viele Zyklen) realisieren.

Erfindungsgemäß ist eine variable Aufteilung der zehn zeitbestimmenden ID-Bits und den MUX-Bits in eine 7+4, 8+3, 9+2 oder 10+1-Kombination denkbar, um 16, 8, 4 oder 2 verschiedene Zyklen, in denen in jeweils gleichen Zeitfenstern 16, 8, 4 oder 2 unterschiedliche Nachrichten Ni übertragen werden, voneinander unterscheiden zu können. Damit ist es möglich, die Nachrichten auf 16, 8, 4 oder 2 Zyklen zu verteilen, wodurch deren Periodendauer verlängert werden kann, ohne auf kurze Wiederholzeiten der Zyklen für "schnelle" Nachrichten verzichten zu müssen.

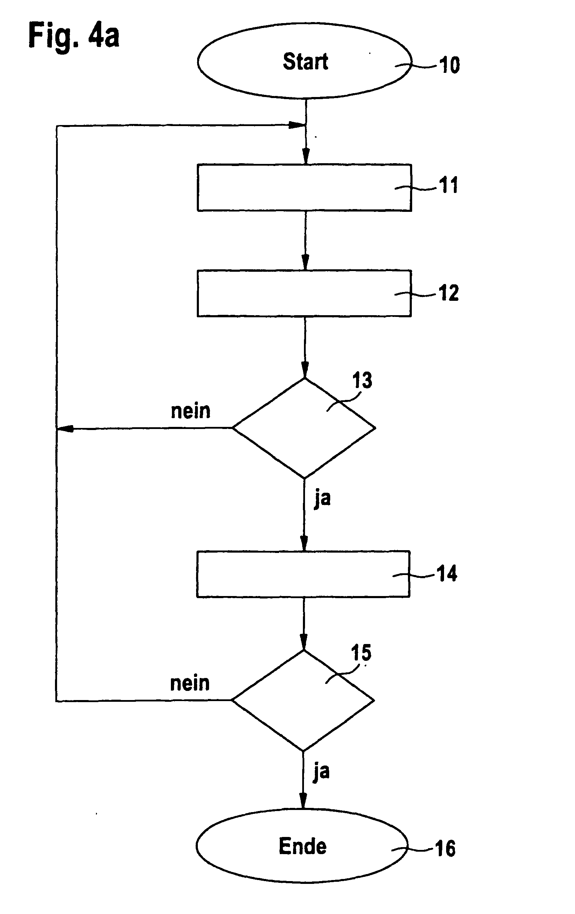

In Figur 4a ist ein Ablaufdiagramm eines erfindungsgemäßen Verfahrens zum Senden von Nutzdaten dargestellt. Das Verfahren beginnt in einem Funktionsblock 10. In einem Funktionsblock 11 beobachtet ein Teilnehmer 3, der Nutzdaten über das Kommunikationssystem 1 übertragen möchte, die Kommunikation auf dem Datenbus 2. Dazu liest der Teilnehmer 3 zumindest die Informationen zur Steuerung und Absicherung des Datenverkehrs der über den Datenbus 2 übertragenen Nachrichten Ni ein, selbst wenn diese nicht für ihn bestimmt sind. Dann ermittelt der Teilnehmer 3 in einem Funktionsblock 12 den Beginn der Übertragung der sich an die aktuelle Nachricht Ni anschließenden Nachricht bzw. den Beginn des sich an den aktuellen Zeitrahmen anschließenden Zeitrahmens. Der Beginn der Übertragung der nächsten Nachricht wird anhand der Kennung ID der aktuellen Nachricht Ni und der dem Teilnehmer 3 bekannten zeitlichen Dauer der einzelnen Zeitschlitze 5 des Zeitrahmens 4 ermittelt.

In einem Abfrageblock 13 wird überprüft, ob der Zeitpunkt des Beginns der nachfolgenden Datenübertragung der vorgegebene Sendezeitpunkt für den Teilnehmer 3 ist. Falls nein, wird zu dem Funktionsblock 11 verzweigt und weiterhin die Kommunikation über den Datenbus 2 beobachtet. Falls ja, sendet der Teilnehmer 3 in einem Funktionsblock 14 die zu übertragenden Nutzdaten in einer Nachricht Ni über den Datenbus 2. Anschließend wird in einem Abfrageblock 15 überprüft, ob das Verfahren beendet ist, bspw. weil ein Ausschaltbefehl (Power-Down) vorliegt. Falls ja, wird ,das erfindungsgemäße Verfahren in einem Funktionsblock 16 beendet. Anderenfalls wird das Verfahren bei dem Funktionsblock 11 fortgesetzt.

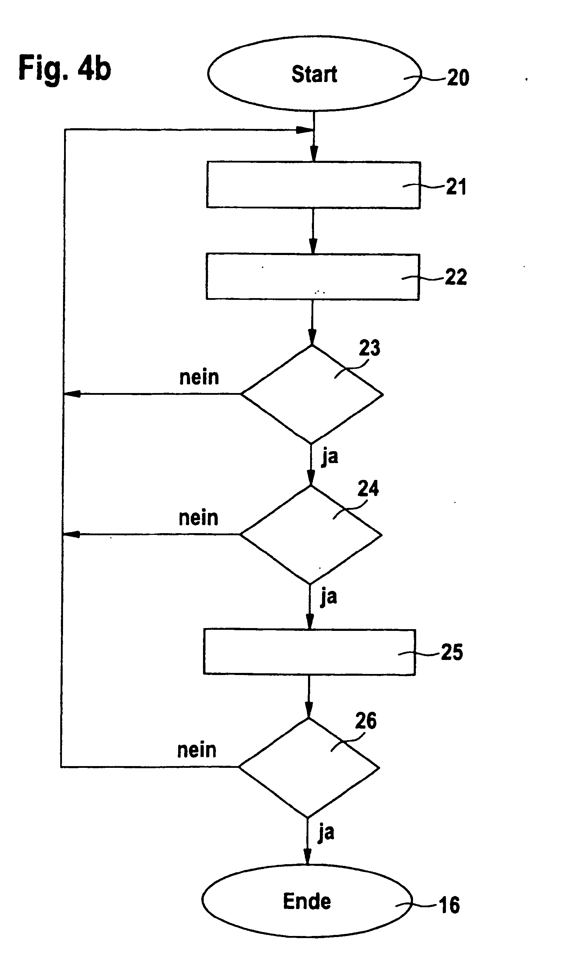

In Figur 4b ist ein Ablaufdiagramm eines erfindungsgemäßen Verfahrens zum Empfangen einer Nachricht mit Nutzdaten von dem Datenbus 2 dargestellt. Das Verfahren beginnt in einem Funktionsblock 20. In einem Funktionsblock 21 beobachtet ein Teilnehmer 3, der Nutzdaten über das Kommunikationssystem 1 empfangen möchte, die Kommunikation auf dem Datenbus 2. Dazu liest der Teilnehmer 3 zumindest die Informationen zur Steuerung und Absicherung des Datenverkehrs der über den Datenbus 2 übertragenen Nachrichten Ni ein, selbst wenn diese nicht für ihn bestimmt sind. Ob eine Nachricht Ni für ihn bestimmt ist, weiß der Teilnehmer 3 erst, nachdem er die Informationen von der Nachricht Ni eingelesen und verarbeitet hat. Im Rahmen der Verarbeitung liest der Teilnehmer 3 in einem Funktionsblock 22 sowohl die Kennung ID als auch die Zyklusinformationen in Form der MUX-Bits einer aktuellen Nachricht Ni ein. In einem Abfrageblock 23 wird überprüft, ob die Kennung ID der Nachricht Ni mit einem in einem Speicher des Teilnehmers 3 abgelegten vorgebbaren Wert für die Kennung ID übereinstimmt. Falls nein, ist die Nachricht nicht für den Teilnehmer 3 bestimmt und das Verfahren wird bei dem Funktionsblock 21 fortgesetzt, wo der Datenbus 2 weiter beobachtet wird. Falls ja, wird das Verfahren in einem Abfrageblock 24 fortgesetzt.

In dem Abfrageblock 24 wird überprüft, ob die Nachricht Ni, die allein anhand der Kennung ID betrachtet für den Teilnehmer 3 bestimmt zu sein scheint, tatsächlich für den Teilnehmer 3 bestimmt ist. Dazu wird überprüft, ob die Zyklusinformationen der aktuellen Nachricht Ni mit in dem Speicher des Teilnehmers 3 abgelegten, vorgebbaren Werten für die Zyklusinformationen übereinstimmen. Bei dem Ausführungsbeispiel aus Figur 2 hätten die Nachrichten N2 und N129 bspw. die gleiche Kennung ID. Dennoch kann die eine Nachricht für einen Teilnehmer und die andere Nachricht für einen anderen Teilnehmer bestimmt sein. Die Zyklusinformationen können darüber Aufschluss geben. Gerade Zyklen sind für den einen Teilnehmer und ungerade Zyklen für den anderen Teilnehmer bestimmt.

Falls die Zyklusinformationen der aktuellen Nachricht Ni mit den in dem Speicher des Teilnehmers 3 abgelegten Werten für die Zyklusinformationen nicht übereinstimmen, wird zu dem Funktionsblock 21 verzweigt und der Datenbus 2 weiter beobachtet. Anderenfalls bedeutet dies, dass die aktuelle Nachricht Ni tatsächlich für den Teilnehmer 3 bestimmt ist. Das Verfahren wird in einem Funktionsblock 25 fortgesetzt, in dem zumindest die Nutzdaten der Nachricht Ni von dem Datenbus 2 in den Teilnehmer 3 geladen und dort entweder in dem Speicher des Teilnehmers 3 gespeichert, weiterverarbeitet oder weitergeleitet. Anschließend wird in einem Abfrageblock 26 überprüft, ob das Verfahren beendet ist, bspw. weil ein Ausschaltbefehl (Power-Down) vorliegt. Falls ja, wird das erfindungsgemäße Verfahren in einem Funktionsblock 27 beendet. Anderenfalls wird das Verfahren bei dem Funktionsblock 21 fortgesetzt.

Die in den Figuren 4a und 4b dargestellten Ablaufdiagramme können in jedem Teilnehmer 3 des Kommunikationssystems 1 ausgeführt werden.

## Patentansprüche

1. Zyklusbasiertes Kommunikationssystem (1) zur Übertragung von Nutzdaten (DATA) zwischen Teilnehmern (3) des Systems (1), umfassend einen Datenbus (2) und daran angeschlossen die Teilnehmer (3), wobei Mittel zur Datenübertragung innerhalb sich zyklisch wiederholender Zeitrahmen (4) mit jeweils mindestens zwei Zeitschlitzen (5) vorgesehen sind, jeder Zeitschlitz (5) zur Übertragung einer Nachricht (Ni) vorgesehen ist, eine Nachricht (Ni) zumindest einen Teil der Nutzdaten (DATA) enthält und jeder Nachricht (Ni) eine Kennung (ID) zugeordnet ist, **dadurch gekennzeichnet, dass** das Kommunikationssystem Mittel enthält, die die Kennung (ID) als Teil der Nachricht (Ni) in jeder Nachricht (Ni) ablegt, dass die oder jede Nachricht (Ni) Informationen über den Zyklus enthält, dass die Zeitschlitze (5) eine feste Länge aufweisen und dass Mittel vorgesehen sind, um mindestens einen der Zeitschlitze (5) eines Zeitrahmens (4) in verschiedenen Zyklen zur versetzten Übertragung unterschiedlicher Nachrichten (Ni) zu nutzen, die nicht zur Übertragung in jedem Zyklus vorgesehen sind.

2. Kommunikationssystem nach Anspruch 1, **dadurch gekennzeichnet, dass** die Informationen über den Zyklus den aktuellen Zyklus betreffen.

3. Kommunikationssystem nach Anspruch 2, **dadurch gekennzeichnet, dass** die den aktuellen Zyklus betreffenden Informationen eine Ordnungszahl des Zyklus umfassen.

4. Kommunikationssystem nach einem der Ansprüche 1 bis 3, **dadurch gekennzeichnet, dass** jeder Nachricht zusätzlich den Zeitschlitz betreffende und der Kennung entnehmbare Zeitinformationen zugeordnet sind.

5. Kommunikationssystem nach Anspruch 4, **dadurch gekennzeichnet, dass** die Zeitinformationen Informationen über die zeitliche Position eines Zeitschlitzes innerhalb eines Zeitrahmens umfassen.

6. Verfahren zum Übertragen von Nutzdaten (DATA) in einem zyklusbasierten Kommunikationssystem (1) zwischen Teilnehmern (3) des Systems (1) über einen Datenbus (2), an den die Teilnehmer (3) angeschlossen sind, wobei die Nutzdaten (DATA) innerhalb sich zyklisch wiederholender Zeitrahmen (4) mit jeweils mindestens zwei Zeitschlitzen (5) übertragen werden, in jedem Zeitschlitz (5) eine Nachricht (Ni) übertragen wird, zumindest ein Teil der Nutzdaten (DATA) in einer Nachricht (Ni) abgelegt wird, und jeder Nachricht (Ni) eine Kennung (ID) zugeordnet wird, **dadurch gekennzeichnet, dass** die Nachrichten. (Ni) in Zeitschlitzen (5) einer festen Länge übertragen werden, dass die Kennung (ID) als Teil der Nachricht (Ni) in jeder Nachricht abgelegt wird, dass in der oder jeder Nachricht (Ni) Informationen über den Zyklus abgelegt werden, dass in mindestens einem der Zeitschlitze (5) eines Zeitrahmens (4) unterschiedliche Nachrichten (Ni) versetzt zueinander in verschiedenen Zyklen übertragen werden, wobei in dem mindestens einen Zeitschlitz (5) solche Nachrichten (Ni) versetzt zueinander übertragen werden, die nicht zur Übertragung in jedem Zyklus vorgesehen sind.

7. Übertragungsverfahren nach Anspruch 6, **dadurch gekennzeichnet, dass** den Teilnehmern (3) des Kommunikationssystems (1) jeweils mindestens ein vorgebbarer Zeitschlitz (5) der Zeitrahmen (4) zur Datenübertragung zugewiesen wird.

8. Übertragungsverfahren nach Anspruch 6 oder 7, **dadurch gekennzeichnet, dass** in der oder jeder Nachricht (Ni) Informationen über den aktuellen Zyklus abgelegt werden.

9. Übertragungsverfahren nach Anspruch 8, **dadurch gekennzeichnet, dass** die Zyklusinformationen als Teil der Kennung (ID) einer Nachricht (Ni) in dieser abgelegt werden.

10. Übertragungsverfahren nach Anspruch 8 oder 9, **dadurch gekennzeichnet, dass** die in den Zeitschlitzen (5) der Zeitrahmen (4) über den Datenbus (2) übertragenen Nachrichten (Ni) von den Teilnehmern (3) des Kommunikationssystems (1) beobachtet werden, dass die Kennungen (ID) und die Zyklusinformationen der Nachrichten (Ni) mit in Speichern der beobachtenden Teilnehmer (3) abgelegten vorgebbaren Werten für die Kennung (ID) und die Zyklusinformationen verglichen werden und zumindest die Nutzdaten (DATA) einer übertragenen Nachricht (Ni) nur dann von einem Teilnehmer (3) empfangen werden, falls die Kennung (ID) und die Zyklusinformationen der Nachricht (Ni) mit den in dem Speicher des Teilnehmers (3) abgelegten vorgebbaren Werten für die Kennung (ID) und die Zyklusinformationen übereinstimmen.

11. Übertraqunqsverfahren nach einem der Ansprüche 8 bis 10, **dadurch gekennzeichnet, dass** der Datenverkehr auf dem Datenbus (2) des Kommunikationssystems (1) beobachtet wird, von den Teilnehmern (3) die aktuellen Zyklusinformationen überprüft werden und von einem Teilnehmer (3) nur dann in einem vorgebbaren Zeitschlitz (5) eine Nachricht (Ni) gesendet wird, falls die aktuellen Zyklusinformationen mit einem in einem Speicher des Teilnehmers (3) abgelegten, vorgebbaren Wert für die Zyklusinformationen übereinstimmen.

## Claims

1. Cycle-based communication system (1) for transmission of payload data (DATA) between users (3) of the system (1), comprising a data bus (2) and the users (3) connected thereto, wherein means are provided for data transmission within cyclically recurring time frames (4) that have at least two time slots (5) each, each time slot (5) is provided for transmission of a message (Ni), a message (Ni) includes at least a portion of the payload data (DATA) and an identification (ID) is associated with each message (Ni), **characterized in that** the communication system includes means which stores the identification (ID), in each message (Ni) as part of the message (Ni), that the message (Ni) or each message (Ni) includes information about the cycle, that the time slots (5) are of a fixed length, and that means are provided for using at least one of the time slots (5) of a time frame (4) in various cycles for the purpose of staggered transmission of various messages (Ni) that are not designated for transmission in each cycle.

2. Communication system according to Claim 1, **characterized in that** the information about the cycle relates to the current cycle.

3. Communication system according to Claim 2, **characterized in that** the information relating to the current cycle comprises an ordinal number of the cycle.

4. Communication system according to any one of Claims 1 to 3, **characterized in that** time information that relates to the time slot and that is extractable from the identification is additionally assigned to each message.

5. Communication system according to Claim 4, **characterized in that** the time information comprises information about the time position of a time slot within a time frame.

6. Method for transmitting payload data (DATA) in a cycle-based communication system (1) between users (3) of the system (1) via a data bus (2) to which the users (3) are connected, wherein the payload data (DATA) are transmitted within cyclically recurring time frames (4) that have at least two time slots (5) each, a message (Ni) is transmitted in each time slot (5), at least a portion of the payload data (DATA) is stored in a message (Ni), and an identification (ID) is associated with each message (Ni), **characterized in that** the messages (Ni) are transmitted in time slots (5) of a fixed length, that the identification (ID) is stored in each message (Ni) as part of the message (Ni), that information about the cycle is stored in the message (Ni) or each message (Ni), that various messages (Ni) are transmitted, staggered in relation to one another in various cycles, in at least one of the time slots (5) of a time frame (4), there being transmitted in the at least one time slot (5) such messages (Ni), staggered in relation to one another, that are not designated for transmission in each cycle.

7. Transmission method according to Claim 6, **characterized in that** at least one predefinable time slot (5) of the time frames (4) is respectively allocated to the users (3) of the communication system (1) for the purpose of data transmission.

8. Transmission method according to either of Claims 6 or 7, **characterized in that** information about the current cycle is stored in the message (Ni) or each message (Ni) .

9. Transmission method according to claim 8, **characterized in that** the cycle information is stored in the message (Ni) as part of the identification (ID) of the latter.

10. Transmission method according to either of Claims 8 or 9, **characterized in that** the messages (Ni) transmitted via the data bus (2) in the time slots (5) of the time frames (4) are monitored by the users (3) of the communication system (1), that the identifications (ID) and the cycle information of the messages (Ni) are compared with predefinable values for the identification (ID) and the cycle information stored in memories of the monitoring users (3), and at least the payload data (DATA) of a transmitted message (Ni) are received by a user (3) only if the identification (ID) and the cycle information of the message (Ni) correspond with the predefinable values for the identification (ID) and the cycle information stored in the memory of the user (3).

11. Transmission method according to any one of Claims 8 to 10, **characterized in that** the data traffic on the data bus (2) of the communication system (1) is monitored, the current cycle information is checked by the users (3) and a message (Ni) is sent in a predefinable time slot (5) by a user (3) only if the current cycle information corresponds with a predefinable value for the cycle information stored in a memory of the user (3).

## Revendications

1. Système de communication (1) à base cyclique pour transmettre des données utiles (DATA) entre des abonnés (3) du système (1), comprenant un bus de données (2) auquel sont reliés les abonnés (3),
des moyens étant prévus pour transmettre les données dans des trames de temps (4) qui se répètent cycliquement, avec chaque fois au moins deux fenêtres de temps (5), et pour transmettre un message (Ni), chaque fenêtre de temps contient un message (Ni) d'au moins une partie des données utiles (DATA) et une caractéristique (ID) est associée à chaque message (Ni),
**caractérisé en ce que**
le système de communication comporte des moyens qui enregistrent la caractéristique (ID) de chaque partie du message (Ni) dans chaque message (Ni),
le ou chaque message (Ni) contient des informations relatives au cycle, les fenêtres de temps (5) ont une longueur fixe et
- des moyens sont prévus pour utiliser au moins l'une des fenêtres de temps (5) d'une trame de temps (4) dans différents cycles pour la transmission répartie de messages d'informations (Ni), différents, prévus pour être transmis dans chaque cycle.

2. Système de communication selon la revendication 1,
**caractérisé en ce que**
les informations relatives au cycle concernent le cycle actuel.

3. Système de communication selon la revendication 2,
**caractérisé en ce que**
les informations concernant le cycle actuel comprennent un numéro d'ordre du cycle.

4. Système de communication selon l'une des revendications 1 à 3,
**caractérisé en ce qu'**
à chaque message sont associées en plus des informations de temps concernant la fenêtre de temps et la caractéristique.

5. Système de communication selon la revendication 4,
**caractérisé en ce que**
les informations de temps comprennent les informations relatives à la position dans le temps d'une fenêtre de temps dans la trame de temps.

6. Procédé de transmission de données utiles (DATA) dans un système de communication (1) à base cyclique entre les abonnés (3) du système (1) par un bus de données (2) auquel sont reliés les abonnés (3), les données utiles (DATA) étant transmises dans des trames de temps (4) qui se répètent cycliquement avec chaque fois au moins deux fenêtres de temps (5),
un message (Ni) étant transmis au cours de chaque fenêtre de temps (5),
au moins une partie des données utiles (DATA) étant enregistrée dans un message (Ni) et à chaque message (Ni) est associée une caractéristique (ID),
**caractérisé en ce qu'**
on transmet les messages (Ni) dans les fenêtres de temps (5) de longueur fixe,
on enregistre la caractéristique (ID) comme partie du message (Ni) dans chaque message,
dans le ou chaque message (Ni) on enregistre des informations relatives au cycle,
dans au moins l'une des fenêtres de temps (5) d'une trame de temps (4) on transmet différents message (Ni) décalés les uns par rapport aux autres dans différents cycles,
et dans au moins une fenêtre de temps (5) on transmet de manière relative, décalée, de tels messages (Ni) qui sont prévus pour une transmission dans chaque cycle.

7. Procédé de transmission selon la revendication 6,
**caractérisé en ce qu'**
aux abonnés (3) du système de communication (1), on attribue respectivement au moins une fenêtre de temps prédéfinie (5) de la trame de temps (4) pour la transmission de données.

8. Procédé de transmission selon la revendication 6 ou 7,
**caractérisé en ce que**
dans le message ou chaque message (Ni) on enregistre des informations concernant le cycle actuel.

9. Procédé de transmission selon la revendication 8,
**caractérisé en ce qu'**
on enregistre les informations de cycle comme partie de la caractéristique (ID) d'un message (Ni) dans celui-ci.

10. Procédé de transmission selon la revendication 8 ou 9,
**caractérisé en ce que**
les messages (Ni) transmis dans les fenêtres de temps (5) de la trame de temps (4) par des messages d'informations (Ni) transmis par le bus de données (2) sont observés par les abonnés (3) du système de communication (1),
la caractéristique (ID) et les informations de cycle des messages d'informations (Ni) avec des valeurs prédéfinies enregistrées dans les mémoires de l'abonné (3), observées, sont comparées pour la caractéristique (ID) et les informations cycliques et au moins les données utiles (DATA) d'un message transmis (Ni) ne sont reçues que d'un abonné (3) que si la caractéristique (ID) et les informations de cycle du message (Ni) coïncident avec les valeurs prédéfinies enregistrées dans la mémoire de l'abonné (3) pour la caractéristique (ID) et les informations de cycle.

11. Procédé de transmission selon l'une des revendications 8 à 10,
**caractérisé en ce qu'**
on observe la circulation de données sur le bus de données (2) du système de communication (1), les abonnés (3) contrôlant les informations cycliques actuelles et un abonné (3 n'émet un message (Ni) vers une fenêtre de temps prédéfinie (5) que si les informations actuelles de cycle correspondent à une valeur prédéfinie des informations de cycle, valeurs enregistrées dans une mémoire de l'abonné (3).
